# EUROPEAN PATENT SPECIFICATION

(11) **EP 1 151 944 B1**
(45) Date of publication and mention of the grant of the patent: **01.06.2005**
(21) Application number: 01200877.7
(22) Date of filing: 08.03.2001
(51) Int. Cl.: B65G 57/24, B65G 47/52, B65G 47/08

(54) **Device for forming a row of products**
Vorrichtung zur Bildung einer Reihe von Produkten
Dispositif pour former une rangée de produits

(30) Priority: 08.03.2000 NL 1014580
(43) Date of publication of application: 07.11.2001
(73) Proprietor: Hannessen, Pieter Gerrit, 3843 JK Harderwijk (NL)
(72) Inventor: Hannessen, Pieter Gerrit, 3843 JK Harderwijk (NL)
(74) Representative: Eveleens Maarse, Pieter

(56) References cited:
- DE-A- 1 914 353
- FR-A- 1 445 845
- US-A- 4 026 422
- US-A- 4 993 536
- US-A- 5 195 627
- US-A- 5 316 123

## Description

The present invention relates to a device for forming at least one row of products, comprising a frame, a number of rollers which are arranged in the frame parallel to each other and transversely of the feed direction of the products and which together form a forming surface, and means for placing each of the products at a predetermined position.

Two types of arrangement of forming devices are known from the prior art: the right-angled arrangement and the in-line arrangement. In the right-angled arrangement a row is formed in line with the feed direction of the products and discharged at a right angle to the feed direction. In the in-line arrangement the line is formed at a right angle to the feed direction of the products and discharged in line with the feed direction. The invention relates to the latter arrangement.

In a forming device known from FR-A-1 445 845 the means for placing each of the products at a predetermined position are formed by a bar arranged above the forming surface. This bar is arranged for displacement at right angles to the feed direction of the products and pushes each product as required to the left, to the right or leaves it in the middle of the forming surface. Another forming device known from the prior art comprises two pivoting bars arranged on the feed side which guide each of the products to the left, the right or the middle of the forming surface.

The object of the present invention is to provide a forming device which, compared to forming devices known from the prior art, has an increased capacity and can be embodied in simpler and more compact manner.

To this end the forming device according to the present invention is characterized in that it comprises at least two mutually adjacent and separately drivable roller tracks. The roller tracks are driven separately for mutually adjacent placing of the products, whereafter the roller tracks are driven together to discharge a formed row.

The forming device according to the present invention preferably comprises three mutually adjacent roller tracks, wherein the central roller track can be driven separately of the outer roller tracks. Each of the products is supplied over the central roller track, which is driven separately for this purpose, and then placed as desired to the left or right of the central roller track onto one of the outer roller tracks. The last product with which a row is formed is fed over the central roller track until it is brought into line with the already placed products. By applying three roller tracks it is possible to suffice with a narrower forming surface, and therefore a more compact forming device.

In order to be more flexible in the forming of a row or layer pattern of products, the outer roller tracks lying on either side of the central roller track are separately drivable.

In a preferred embodiment according to the invention the part of the forming surface formed by the central roller track lies at a higher position than the parts thereof formed by the outer roller tracks. Products of different dimensions can hereby be formed.

In order to form the three roller tracks, there are provided shafts arranged mutually parallel and, per shaft, three rollers, wherein the outer rollers are mounted on the shafts and the central rollers are connected non-rotatably to the shafts. A structurally very simple forming device is hereby obtained.

In this very advantageous embodiment, there are preferably provided a drive for the shafts and at least one drive for the mounted rollers.

The means for placing each of the products at a predetermined position preferably further comprise a placing element displaceable parallel to the rollers. Using the placing element a product is pushed transversely of the rollers to the correct roller track.

In addition, the placing element is preferably displaceable from a position engaging the products for placing to a position located substantially under the forming surface. The placing element is situated wholly outside and under the forming surface during feed of each of the products. The forming device is therefore less susceptible to breakdown than the forming devices known from the prior art, wherein the placing means are situated at all times above the forming surface, whereby the products can become jammed.

The placing element is preferably drivable by means of a spindle for displacement parallel to the rollers. The placing element, and therefore each of the products, can hereby be positioned accurately on the forming surface.

In addition, the forming device according to the present invention preferably comprises a programmable control for actuating the means for placing each of the products at a predetermined position. The control is provided with data relating to the desired pattern of products to be formed.

In an advantageous embodiment according to the invention, means for detecting a product are arranged close to the feed side of the forming surface.

In order to obtain a fully automatic forming device the detecting means are coupled to the control for driving the roller tracks. On the basis of the forming pattern stored in the control and the rotation speed of the rollers of the roller tracks, the length of time is determined for driving the roller tracks so as to place each product at the correct position on the forming surface.

According to a further embodiment of the invention a manipulating device is provided for placing a product in the correct orientation prior to in-line forming of this product.

According to a first embodiment thereof, the manipulating device comprises two endless belts arranged substantially parallel to each other which are drivable independently of each other. Independent driving of the belts results in a speed difference, whereby a product lying on the belts will turn. When in addition the endless belts are drivable independently of each other in two directions, it will be possible to turn a product even more quickly. A support pin arranged between the belts and displaceable in the height further functions during the turning as point of rotation for the product resting thereon. The product hereby has less of a tendency to run off the track during turning.

According to a second embodiment thereof, the manipulating device comprises a turning pin arranged transversely of the forming surface. A supplied product will run up against the turning pin and, when the rollers are driven further, will rotate round the turning pin. So as to reduce the risk of damage to the products during turning, the turning pin comprises a freely rotatable outer sleeve. A particularly advantageous and compact device for manipulating and forming products is obtained when the turning pin is connected to the placing element of the forming device.

The invention also relates to a palletizing installation in which a forming device according to the invention can be applied. The palletizing installation further comprises a loading device for placing on a pallet one or more formed rows of products. According to an embodiment of the invention the loading device comprises a stand and a lifting frame placed in the stand for carrying a pallet, wherein the lifting frame is connected via a first cable running over a pulley to a counterweight and via a second cable running over a pulley to a motor for lifting the lifting frame. The counterweight herein exerts no load on the motor, whereby it is possible to suffice with a relatively simple and inexpensive motor. In addition, the counterweight in both the static and dynamic situation is in balance with the lifting frame and pallet. In order to place one pallet at a time in the loading device the lifting frame comprises support means for supporting a pallet and/or clamping means for fixedly clamping a pallet at the sides.

The present invention will be further elucidated with reference to the annexed drawings. In the drawings:
Figure 1 shows a perspective view of a first embodiment of a forming device according to the present invention;
Figure 2 is a schematic perspective view of a palletizing installation with the forming device of fig. 1;
Figure 3 is a perspective view of a second embodiment of a forming device according to the present invention;
Figure 4 is a perspective view of a third embodiment of a forming device according to the present invention;
Figure 5 shows a perspective view of a loading unit; and
Figure 6 shows a perspective view of a further embodiment of a palletizing installation.

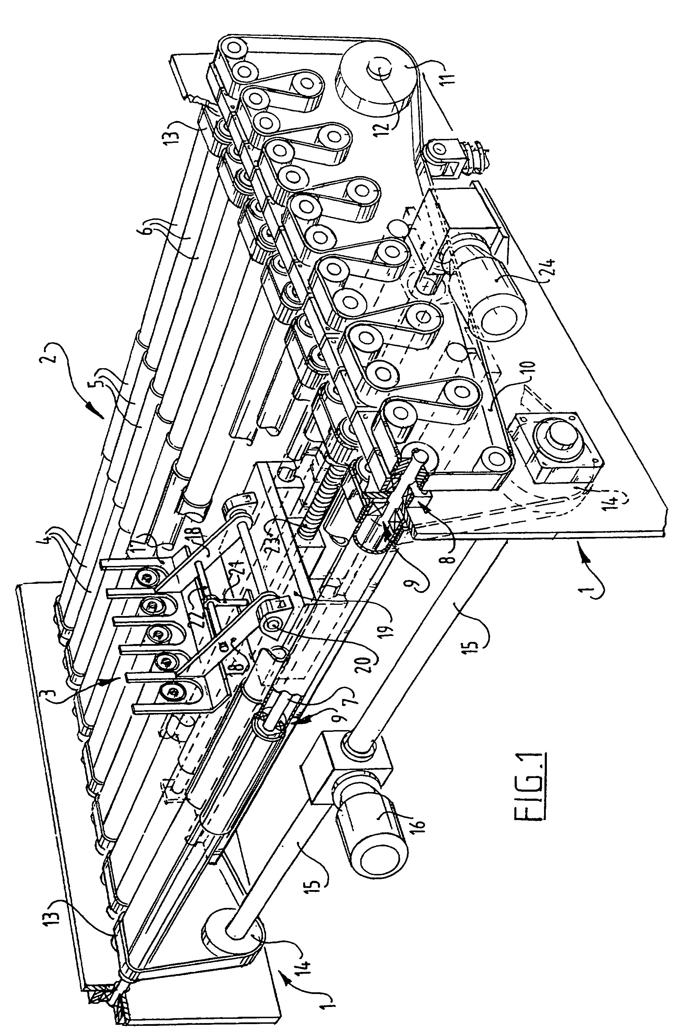

The device shown in perspective view in fig. 1 for forming at least one row of products comprises a frame 1, a number of rollers 2 which are arranged in frame 1 parallel to each other and transversely of the feed direction of the products, and which together form a forming surface, and means for placing each of the products 3 at a predetermined position. Each of the rollers 2 is in fact formed by three rollers 4, 5 and 6 lying mutually in line. The central rollers 5 are connected non-rotatably to shafts 7 which are mounted at the ends 8 thereof in frame 1. The outer rollers 4, 6 are in turn mounted on shafts 7, this being designated with reference numeral 9 in fig. 1. Shafts 9 are driven on the outer side of frame 1 by means of a drive belt 10, drive wheel 11, motor shaft 12 and a motor which is not shown in fig. 1 but which is located on the other side of the frame. Outer rollers 4, 6 can rotate freely around the shafts 7 extending therethrough. Outer rollers 4, 6 are driven at the ends remote from each other by means of a drive belt 13, a drive wheel 14, a motor shaft 15 and a motor 16 located under forming surface 2. Instead of one common motor 16, the outer rollers can also be driven individually by drive wheels 11, 14 each being separately connected to a motor.

The diameter of the central rollers 5 is greater than the diameter of outer rollers 4, 6. The part of the forming surface formed by the central roller track 5 hereby lies at a higher position than the parts thereof formed by outer roller tracks 4, 6.

In addition, the forming device comprises a placing element 17 which lies under forming surface 2 and which is displaceable from a position engaging the products for placing to a position located substantially under the forming surface and parallel to rollers 4, 5 and 6. Placing element 17 is embodied in the form of a raker, the teeth of which can be inserted between rollers 4, 5 and 6 of the three roller tracks. The raker is connected pivotally to a carrier 19 via two lifting arms 18. A cylinder 21 is arranged at a distance from pivot shaft 20 between carrier 19 and lifting arms 18. Using cylinder 21 the lifting arms 18, and therewith raker-shaped placing element 17, are displaced transversely of forming surface 2. Carrier 19 is further connected to a spindle 23 which is driven by a motor 24 for displacing the placing element 17 parallel to rollers 4, 5 and 6. Instead of a spindle 23 it is also possible to use a cylinder or the like to drive placing element 17.

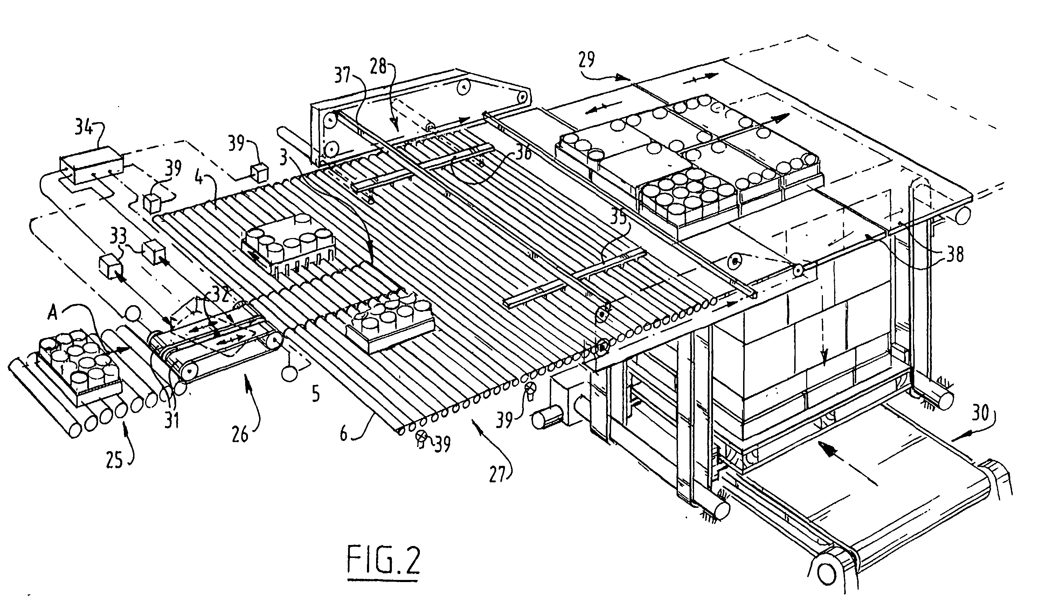

Fig. 2 shows an application of the forming device according to the present invention in a palletizing installation. As seen in the feed direction of the products designated with A, the palletizing machine successively comprises a feed unit 25, a manipulating unit 26, a forming unit 27, a parking unit 28, a loading unit 29 and an outfeed unit 30. Feed unit 25 is formed by a roller conveyor but can equally well consist of a conveyor belt. Manipulating unit 26 comprises two conveyor belts 31 arranged mutually parallel which can be driven independently of each other and each in two directions and at desired speed. An up and downward movable support pin 32 is provided between the two conveyor belts 31. The manipulating unit further comprises two photocells 33 which are arranged the same distance from conveyor belts 31 and which are connected to a control 34 for driving each of the conveyor belts 31. Photocells 33 determine the distance to a product lying on conveyor belts 31.

A product can be brought into a desired orientation in manipulating unit 26. A product supplied over feed unit 25 is either turned or not subject to the desired orientation. The product is turned through 90° or 180°, subject once again to the desired orientation. Whether a product is turned and through which angle a product is turned depends on the direction of each of the conveyor belts and the difference in the speed of the conveyor belts. Support pin 32 is provided to allow turning to proceed smoothly and to prevent the product running off the track. Support pin 32 functions during turning as point of rotation for the product resting thereon, wherein it is not important that this point be situated in the middle of the product. The above mentioned photocells 33 serve to drive each of the conveyor belts 31 in the desired direction and at the desired speed. Both photocells 33 measure the distance to the product and whether the product is lying in the desired orientation is determined on the basis of a comparison of the measured distances, so that driving of one of the two or both conveyor belts 31 can be stopped. When an equal distance is measured by the two photocells 33, the product is lying in line with the feed direction. In order to prevent both photocells 33 measuring an equal distance while the product lies at an angle of 45° relative to each photocell, a time factor can be entered in control 34 or a third photocell can be provided. The time factor determines the minimum time the turning takes to carry a product beyond a 45° angle. Only then will photocells 33 be able to determine by measuring the distance whether the driving of the conveyor belts 31 can be stopped. A third photocell likewise measures the distance to the product on conveyor belts 31. In this case the driving will be stopped when all three photocells 33 measure the same distance.

After placing of a product in the correct orientation, this product is taken over by the central roller track 5 of forming unit 27. Because the diameter of each of the central rollers 5 is larger than the diameter of each of the outer rollers 4, 6, the product is displaced slightly above the forming surface parts formed by outer rollers 4, 6. Forming unit 27 is hereby not limited to forming products of a determined maximum dimension. Products with a width greater than the width of the central roller track 5 can also be transported without sliding over the outer (stationary) rollers.

A description of a possible operation of forming unit 27 will now be given. A first product, which lies in the desired orientation, is taken over from conveyor belts 31 by the central roller track 5. As it passes detecting means 39 arranged close to the feed side of forming unit 27, the control 34 actuates the drive of the central rollers 5 for a predetermined time. The product is transported forward by the central roller track 5 until the desired position is reached. Depending on the desired final position of the product in the row to be formed, the product is then displaced to the left or right by the placing element 17 located under the forming surface. Placing element 17 is carried upward between rollers 4-6 only if a product must be displaced transversely of the feed direction of the products. Placing element 17 is then carried back below the forming surface, so that a subsequent product can be supplied over the central roller track 5. This subsequent product is transported forward until it is located at the position of the already placed product, whereafter placing element 17 is brought upward to carry this product to the other side of the central roller track 5. Finally, a third product is supplied over the central roller track 5 to a position between the two already placed products. The thus formed row is discharged from the forming unit 27 by driving the whole forming surface formed by outer rollers 4, 6 and the central rollers 5. After the forming unit 27 the formed row comes to lie on a parking unit 28. On parking unit 28 the rows formed on the forming unit are formed into a layer.

Parking unit 28 consists of a roller track lying in the line of roller tracks 4-6 of forming unit 27. Parking unit 28 is further provided with two elements 35, 36 for pressing sidewards on a formed product layer. The one pressing element 35 has a fixed position, while the other pressing element 36 is arranged displaceably. After the sideward pressing the layer is pushed by means of a continuously circulating bar 37 onto the shuttle plates 38 of loading unit 29. When shuttle plates 38 are retracted to lay off a formed layer onto a pallet, the continuously circulating bar 37 ensures that the layer is held in place. For a description of the loading unit 29 shown in fig. 2 reference is made to the Netherlands patent application NL 1010468. Another embodiment of a loading unit 29 is described hereinbelow.

With an arrangement as shown in fig. 2 it is possible to achieve a capacity of a minimum of 3200 products per hour. A further increase in the capacity can be obtained by combining parking unit 28 and forming unit 27. It is possible with the forming unit 27 according to the present invention to form not only a row but even a layer, which can be transferred directly to shuttle plates 38 of loading unit 29.

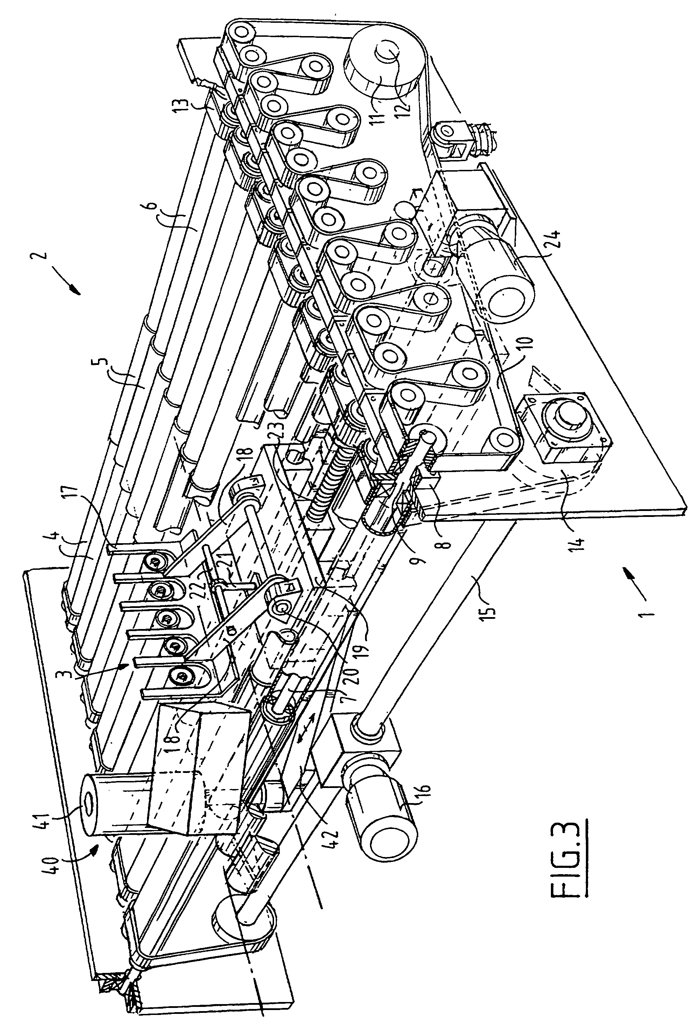

Fig. 3 shows a second embodiment of a forming device. Components which correspond with components of the forming device of fig. 1 are designated in fig. 2 with the same reference numerals. The main difference lies in the fact that the forming device shown in fig. 3 also comprises a manipulating device for placing a product in the correct orientation. The functions of units 26,27 of fig. 2 are in fact combined in the forming device of fig. 1. The manipulating device comprises a turning pin 40 arranged transversely of forming surface 2. A freely rotatably sleeve 41 is arranged around the turning pin 40. Turning pin 40 is further connected to placing element 17 of the forming device by means of an arm 42 located under forming surface 2.

When a product is supplied over feed unit 25 to the forming device, it will run up against sleeve 41 of turning pin 40. As the rollers of the central roller track 5 are further rotated, the product will begin to turn about the turning pin 40 until it comes to lie against placing element 17. The freely rotatable sleeve 41 ensures that no friction occurs between product and turning pin 40 during the turning, whereby damage to the product is avoided. The forming device according to fig. 3 provides a relatively compact device which simultaneously turns and forms products of different dimensions.

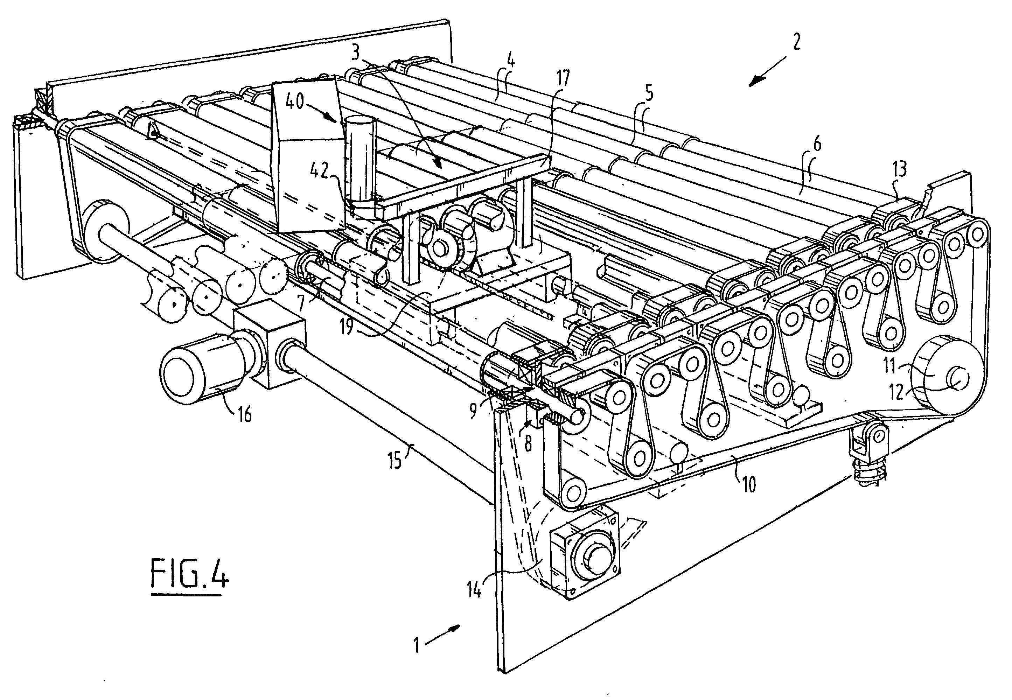

Fig. 4 shows a third embodiment of a forming device. Components which correspond with components of the forming devices shown in fig. 1 and 3 are once again designated with the same reference numerals. In this embodiment the turning pin 40 is not provided with a freely rotatable outer sleeve. In addition, the height-displaceable raker of fig. 1 and 3 is replaced as placing element 17 by a bar displacing above forming surface 2. Turning pin 40 is situated in line with placing element 17. Depending on the position of turning pin 40 and placing element 17, a product will turn to the left or to the right as seen in feed direction, and come to a stop on the left or right-hand side of the bar. The bar is then displaced to the left or to the right to place the product on the left or right-hand roller track 4, 6. While a less high capacity is achieved with the forming device of fig. 4 compared to that of fig. 3, the device itself is however less expensive.

It is further noted that it is also possible to supply products over the outer roller tracks 4, 6 and to then slide these products from the left and/or the right onto the central roller track 5 using a placing element 17. Finally, it is also possible in order to increase capacity to provide two placing elements 17, each provided with a turning pin 40, which act from the left respectively the right-hand side of the forming device towards the middle thereof.

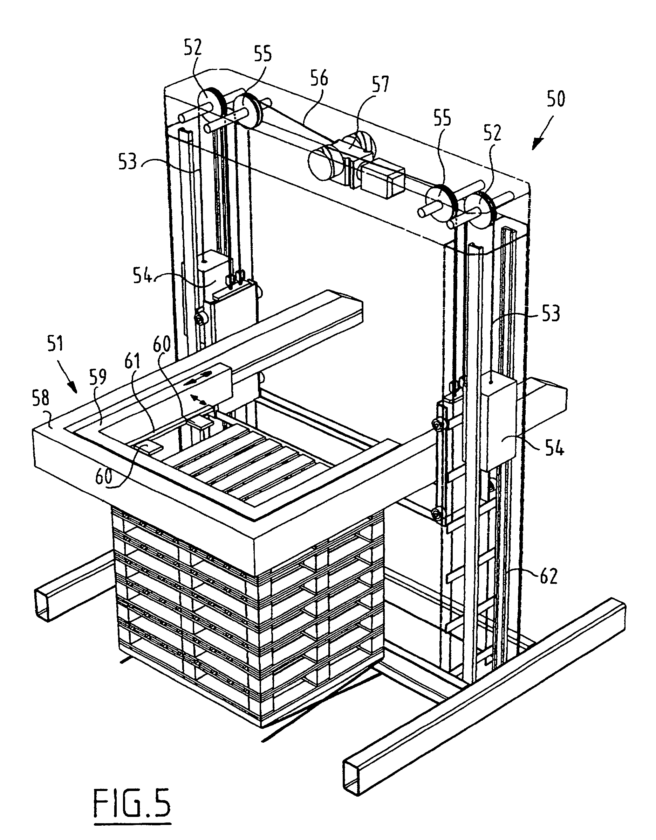

Fig. 5 shows in perspective view an embodiment of a loading unit 29 for placing on a pallet one or more rows of products formed by forming device 27. Loading unit 29 comprises a stand 50 and a lifting frame 51 placed in stand 50 for carrying a pallet. Lifting frame 51 is connected on either side to a counterweight 54 via a first cable 53 running over a pulley 52 and connected via a second cable 56 running over a pulley 55 to a motor 57 for lifting the lifting frame 51. Lifting frame 51 consists of a U-shaped main frame 58 suspended from cables 53, 55 and a U-shaped sub-frame 59 which is received displaceably in main frame 58. Sub-frame 59 comprises two clamping members 60 displaceable toward each other for lateral clamping of a pallet. Further mounted on the clamping members are support lips 61 on which a pallet comes to support. It is optionally possible to suffice with support means for supporting a pallet which are mounted on sub-frame 59.

Lifting frame 51 removes an empty pallet from a supply of pallets and is then carried upward by motor 57. One formed layer of products at a time is laid off onto the pallet and the pallet is carried downward in stepwise manner. When a pallet is loaded it is placed on the ground. The pallet can be discharged over a roller conveyor or be collected by an automatically guided vehicle (AGV). In the meantime a new pallet is taken from the stack by lifting frame 51. For this purpose the sub-frame 59 is displaced outward in main frame 58 so that sub-frame 59 comes to lie with clamping members 60 and support lips 61 at the height of the stack of pallets. The pallet is supported and clamped by displacing clamping members 60 toward each other. Finally, sub-frame 59 is displaced to the rear in main frame 58 between the uprights 62 of stand 50 so that it can be carried upward again.

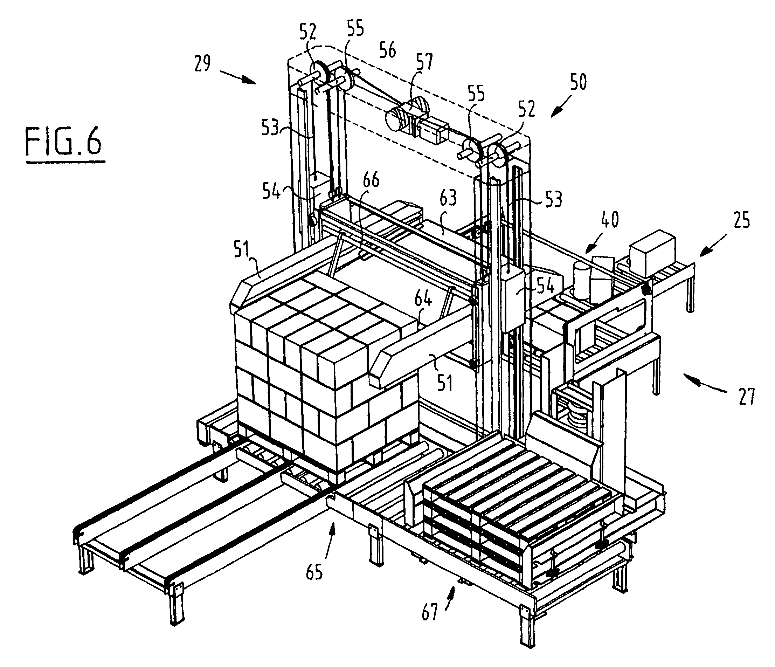

Fig. 6 shows a further embodiment of a palletizing installation. Products are here supplied at low level over feed unit 25. If desired, a product is turned by means of a turning pin 40 until it lies in the correct orientation. A row of products is formed on forming unit 27, wherein a number of such formed rows form a layer which is laid off onto a pallet in loading unit 29. Similarly to the loading unit 29 shown in fig. 5, loading unit 29 is provided with a stand 50 and a lifting frame 51 placed in stand 50 for carrying a lay-off plate 63. Lifting frame 51 consists here of two arms which are each connected to a counterweight 54 via a first cable 53 running over a pulley 52 and via a second cable 56 running over a pulley 55 to lifting motor 57. The lay-off plate 63 can not only be carried upward and downward by means of lifting motor 57, but is also further arranged displaceably between lifting arms 51. A restraining member 64 is further provided above lay-off plate 63 and between stand 50. Finally provided under loading unit 29 is a roller conveyor 65 over which one empty pallet at a time is supplied from a supply storage 67 to a position below lifting arms 51.

A pallet is loaded with the palletizing installation of fig. 6 in the following manner. Lay-off plate 63 is brought to the height of forming unit 27. Products formed in each case are moved from forming unit 27 onto lay-off plate 63, wherein member 64 ensures that the products are held in place. Lay-off plate 63 is carried upward using lifting motor 57 until it arrives at the height of the upper side of the pallet. In addition, the restraining member 64 is swivelled away around rotation shaft 66 and the lay-off plate displaces between lifting arms 51 in the direction of the pallet. Restraining member 64 is rotated further around rotation shaft 66 to return to its starting position. The products on lay-off plate 63 are laid off onto the pallet by displacing lay-off plate 63 to the rear at great speed. Restraining member 64 herein ensures that the products do not co-displace rearward. Plate 63 is carried downward again to collect a subsequent layer of formed products and the above described steps are repeated until a pallet is loaded and can be discharged.

It is finally noted that the present invention is not limited to the preferred embodiment shown in the drawings. It is thus possible to operate with two or more feed units 25 and manipulating units 26, wherein the forming unit comprises four or five mutually adjacent roller tracks or wherein two forming units (as seen in feed direction of the products) are placed one behind the other. As a result of the modular structure of the palletizing system, capacity increases can hereby also be obtained in simple manner.

## Claims

1. Device for forming at least one row of products, comprising a frame, a number of rollers which are arranged in the frame parallel to each other and transversely of the feed direction of the products and which together form a forming surface, and means for placing each of the products at a predetermined position, **characterized by** at least two mutually adjacent and separately drivable roller tracks.

2. Forming device as claimed in claim 1, **characterized by** three mutually adjacent roller tracks, wherein the central roller track can be driven separately of the outer roller tracks.

3. Forming device as claimed in claim 2, **characterized in that** the outer roller tracks lying on either side of the central roller track are separately drivable.

4. Forming device as claimed in claim 2 or 3, **characterized in that** the part of the forming surface formed by the central roller track lies at a higher position than the parts thereof formed by the outer roller tracks.

5. Forming device as claimed in any of the claims 2-4, **characterized in that** in order to form the three roller tracks, there are provided shafts arranged mutually parallel and, per shaft, three rollers, wherein the outer rollers are mounted on the shafts and the central rollers are connected non-rotatably to the shafts.

6. Forming device as claimed in claim 5, **characterized in that** there are provided a drive for the shaft and at least one drive for the mounted rollers.

7. Forming device as claimed in any of the foregoing claims, **characterized in that** the means for placing each of the products at a predetermined position comprise a placing element displaceable parallel to the rollers.

8. Forming device as claimed in claim 7, **characterized in that** the placing element is displaceable from a position engaging the products for placing to a position located substantially under the forming surface.

9. Forming device as claimed in claim 7 or 8, **characterized in that** the placing element is drivable by means of a spindle for displacement parallel to the rollers.

10. Forming device as claimed in any of the foregoing claims, **characterized in that** a programmable control is provided for actuating the means for placing each of the products at a predetermined position.

11. Forming device as claimed in any of the foregoing claims, **characterized in that** means for detecting a product are arranged close to the feed side of the forming surface.

12. Forming device as claimed in claims 10 and 11, **characterized in that** the detecting means are coupled to the control for driving the roller tracks.

13. Forming device as claimed in any of the foregoing claims, **characterized in that** a manipulating device is provided for placing a product in the correct orientation.

14. Forming device as claimed in claim 13, **characterized in that** the manipulating device comprises two endless belts arranged substantially parallel to each other which are drivable independently of each other.

15. Forming device as claimed in claim 14, **characterized in that** the endless belts are drivable independently of each other in two directions.

16. Forming device as claimed in claim 14 or 15, **characterized in that** a support pin displaceable in the height is arranged between the belts.

17. Forming device as claimed in claim 13, **characterized in that** the manipulating device comprises a turning pin arranged transversely of the forming surface.

18. Forming device as claimed in claim 17, **characterized in that** the turning pin comprises a freely rotatable outer sleeve.

19. Forming device as claimed in claim 17 or 18, **characterized in that** the turning pin is connected to the placing element of the forming device.

20. Palletizing installation comprising a forming device as claimed in any of the foregoing claims and a loading device for placing on a pallet one or more formed rows of products.

21. Palletizing installation as claimed in claim 20, **characterized in that** the loading device comprises a stand and a lifting frame placed in the stand for carrying a pallet, wherein the lifting frame is connected via a first cable running over a pulley to a counterweight and via a second cable running over a pulley to a motor for lifting the lifting frame.

22. Palletizing installation as claimed in claim 21, **characterized in that** the lifting frame comprises support means for supporting a pallet.

23. Palletizing installation as claimed in claim 21 or 22, **characterized in that** the lifting frame comprises clamping means for fixedly clamping a pallet at the sides.

## Patentansprüche

1. Vorrichtung zum Bilden mindestens einer Reihe von Produkten, mit einem Rahmen, einer Anzahl von Rollen, die im Rahmen parallel zueinander und quer zur Förderrichtung der Produkte angeordnet sind und zusammen eine Bildungsoberfläche bilden, und einer Einrichtung zum Plazieren jedes der Produkte bei einer vorbestimmten Position, **gekennzeichnet durch** mindestens zwei wechselseitig nebeneinander liegende, getrennt antreibbare Rollenbahnen.

2. Bildungsvorrichtung wie im Anspruch 1 beansprucht, **gekennzeichnet durch** drei wechselseitig nebeneinander liegende Rollenbahnen, wobei die mittlere Rollenbahn getrennt von den äußeren Rollenbahnen angetrieben werden kann.

3. Bildungsvorrichtung wie im Anspruch 2 beansprucht, **dadurch gekennzeichnet, daß** die äußeren Rollenbahnen, die auf den jeweiligen Seiten der mittleren Rollenbahn liegen, getrennt antreibbar sind.

4. Bildungsvorrichtung wie im Anspruch 2 oder 3 beansprucht, **dadurch gekennzeichnet, daß** der Bereich der Bildungsoberfläche, der durch die mittlere Rollenbahn gebildet wird, bei einer höheren Position liegt als die Bereiche davon, die durch die äußeren Rollenbahnen gebildet werden.

5. Bildungsvorrichtung wie in irgendeinem der Ansprüche 2-4 beansprucht, **dadurch gekennzeichnet, daß**, um die drei Rollenbahnen zu bilden, Schafte wechselseitig parallel zueinander und mit drei Rollen pro Schaft vorgesehen sind, wobei die äußeren Rollen auf den Schaften montiert sind und die mittleren Rollen nicht rotierbar mit den Schaften verbunden sind.

6. Bildungsvorrichtung wie im Anspruch 5 beansprucht, **dadurch gekennzeichnet, daß** ein Antrieb für den Schaft und mindestens ein Antrieb für die montierten Rollen bereitgestellt sind.

7. Bildungsvorrichtung wie in irgendeinem der vorangehenden Ansprüche beansprucht, **dadurch gekennzeichnet, daß** die Einrichtung zum Plazieren von jedem der Produkte bei einer vorbestimmten Position ein Plazierelement einschließt, das parallel zu den Rollen versetzbar ist.

8. Bildungsvorrichtung wie im Anspruch 7 beansprucht, **dadurch gekennzeichnet, daß** das Plazierelement von einer Position zum Eingreifen der Produkte versetzbar ist, zum Plazieren auf eine Position, die im wesentlichen unterhalb der Bildungsoberfläche lokalisiert ist.

9. Bildungsvorrichtung wie im Anspruch 7 oder 8 beansprucht, **dadurch gekennzeichnet, daß** das Plazierelement mittels einer Spindel zum Versetzen parallel zu den Rollen antreibbar ist.

10. Bildungsvorrichtung wie in irgendeinem der vorangehenden Ansprüche beansprucht, **dadurch gekennzeichnet, daß** eine programmierbare Steuerung vorgesehen ist, zum Betätigen der Einrichtung zum Plazieren von jedem der Produkte auf eine vorbestimmte Position.

11. Bildungsvorrichtung wie in irgendeinem der vorangehenden Ansprüche beansprucht, **dadurch gekennzeichnet, daß** eine Einrichtung zum Detektieren eines Produkts nahe bei der Zufuhrseite der Bildungsoberfläche angeordnet ist.

12. Bildungsvorrichtung wie in den Ansprüchen 10 und 11 beansprucht, **dadurch gekennzeichnet, daß** die Detektiereinrichtung mit der Steuerung zum Antreiben der Rollenbahnen gekoppelt ist.

13. Bildungsvorrichtung wie in irgendeinem der vorangehenden Ansprüche beansprucht, **dadurch gekennzeichnet, daß** eine Manipuliervorrichtung zum Plazieren eines Produkts in der richtigen Orientierung vorgesehen ist.

14. Bildungsvorrichtung wie in Anspruch 13 beansprucht, **dadurch gekennzeichnet, daß** die Manipuliervorrichtung zwei, im wesentlichen parallel zueinander angeordnete Endlosbänder einschließt, die unabhängig voneinander antreibbar sind.

15. Bildungsvorrichtung wie in Anspruch 14 beansprucht, **dadurch gekennzeichnet, daß** die Endlosbänder unabhängig voneinander in zwei Richtungen antreibbar sind.

16. Bildungsvorrichtung wie im Anspruch 14 oder 15 beansprucht, **dadurch gekennzeichnet, daß** ein Tragestift, der in der Höhe versetzbar ist, zwischen den Bändern angeordnet ist.

17. Bildungsvorrichtung wie im Anspruch 13 beansprucht, **dadurch gekennzeichnet, daß** die Manipuliervorrichtung einen quer zur Bildungsoberfläche angeordneten Drehstift aufweist.

18. Bildungsvorrichtung wie im Anspruch 17 beansprucht, **dadurch gekennzeichnet, daß** der Drehstift eine frei rotierbare äußere Hülse umfaßt.

19. Bildungsvorrichtung wie im Anspruch 17 oder 18 beansprucht, **dadurch gekennzeichnet, daß** der Drehstift mit dem Plazierelement der Bildungsvorrichtung verbunden ist.

20. Palettierinstallation mit einer Bildungsvorrichtung wie in irgendeinem der vorangehenden Ansprüche beansprucht und einer Beladungsvorrichtung zum Plazieren einer oder mehrerer gebildeter Reihen von Produkten auf einer Palette.

21. Palettierinstallation wie im Anspruch 20 beansprucht, **dadurch gekennzeichnet, daß** die Beladungsvorrichtung ein Gestell und einen im Gestell plazierten Heberahmen zum Tragen einer Palette aufweist, wobei der Heberahmen über ein erstes Kabel, das über eine Rolle läuft, mit einem Gegengewicht und über ein zweites Kabel, das über eine Rolle läuft, mit einem Motor zum Heben des Heberahmens verbunden ist.

22. Palettierinstallation wie im Anspruch 21 beansprucht, **dadurch gekennzeichnet, daß** der Heberahmen eine Trageeinrichtung zum Tragen einer Palette einschließt.

23. Palettierinstallation wie im Anspruch 21 oder 22 beansprucht, **dadurch gekennzeichnet, daß** der Heberahmen eine Klemmeinrichtung zum festen Einklemmen einer Palette an den Seiten einschließt.

## Revendications

1. Dispositif pour former au moins une rangée de produits, comprenant un cadre, une pluralité de rouleaux qui sont disposés dans le cadre parallèlement les uns aux autres et transversalement par rapport à la direction d'alimentation des produits et qui forment ensemble une surface de formage, et des moyens pour placer chacun des produits dans une position pré-déterminée, **caractérisé en ce qu'**au moins deux chemins de roulement adjacents et pouvant être entraînés séparément, sont présents.

2. Dispositif de formage selon la revendication 1, **caractérisé en ce que** trois chemins de roulement mutuellement adjacents sont présents, dans lequel le chemin de roulement central peut être entraîné séparément des chemins de roulement extérieurs.

3. Dispositif de formage selon la revendication 2, **caractérisé en ce que** les chemins de roulement extérieurs reposant sur chaque côté du chemin de roulement central peuvent être entraînés séparément.

4. Dispositif de formage selon la revendication 2 ou 3, **caractérisé en ce que** la partie de la surface de formage formée par le chemin de roulement central est surélevée par rapport aux parties de celle-ci formées par les chemins de roulement extérieurs.

5. Dispositif de formage selon l'une quelconque des revendications 2 à 4, **caractérisé en ce qu'**afin de former les trois chemins de roulement, des arbres sont aménagés mutuellement et parallèlement, avec trois rouleaux par arbre, dans lequel les rouleaux extérieurs sont montés sur les arbres et les rouleaux centraux sont raccordés de manière non-rotative aux arbres.

6. Dispositif de formage selon la revendication 5, **caractérisé en ce qu'**un entraînement pour l'arbre et au moins un entraînement pour les rouleaux montés sont prévus.

7. Dispositif de formage selon l'une quelconque des revendications précédentes, **caractérisé en ce que** le moyen de placement de chacun des produits dans une position pré-déterminée comprend un élément de placement déplaçable parallèlement aux rouleaux.

8. Dispositif de formage selon la revendication 7, **caractérisé en ce que** l'élément de placement est déplaçable d'une position engageant les produits pour se placer dans une position située essentiellement sous la surface de formage.

9. Dispositif de formage selon la revendication 7 ou 8, **caractérisé en ce que** l'élément de placement peut être entraîné au moyen d'une tige de déplacement parallèle aux rouleaux.

10. Dispositif de formage selon l'une quelconque des revendications précédentes, **caractérisé en ce qu'**une commande programmable est fournie pour déclencher le moyen de placement de chacun des produits dans une position pré-déterminée.

11. Dispositif de formage selon l'une quelconque des revendications précédentes, **caractérisé en ce que** des moyens de détection d'un produit sont aménagés près du côté d'alimentation de la surface de formage.

12. Dispositif de formage selon les revendications 10 et 11, **caractérisé en ce que** le moyen de détection est couplé à la commande pour entraîner les chemins de roulement.

13. Dispositif de formage selon l'une quelconque des revendications précédentes, **caractérisé en ce qu'**un dispositif de manipulation est fourni pour placer un produit dans son orientation correcte.

14. Dispositif de formage selon la revendication 13, **caractérisé en ce que** le dispositif de manipulation comprend deux courroies sans fin disposées de manière essentiellement parallèle l'une à l'autre, qui peuvent être entraînées indépendamment l'une de l'autre.

15. Dispositif de formage selon la revendication 14, **caractérisé en ce que** les courroies sans fin sont entraînables indépendamment l'une de l'autre dans deux directions.

16. Dispositif de formage selon les revendications 14 ou 15, **caractérisé en ce qu'**une tige de support déplaçable en hauteur est aménagée entre les courroies.

17. Dispositif de formage selon la revendication 13, **caractérisé en ce que** le dispositif de manipulation comprend une tige de rotation disposée de manière transversale par rapport à la surface de formage.

18. Dispositif de formage selon la revendication 17, **caractérisé en ce que** la tige de rotation comprend un manchon extérieur rotatif librement.

19. Dispositif de formage selon la revendication 17 ou 18, **caractérisé en ce que** la tige de rotation est raccordée à l'élément de placement du dispositif de formage.

20. Installation de palettisation comprenant un élément de formage selon l'une quelconque des revendications précédentes et un dispositif de chargement pour placer sur une palette, une ou plusieurs rangée(s) formée(s) de produits.

21. Installation de palettisation selon la revendication 20, **caractérisée en ce que** le dispositif de chargement comprend un socle et un cadre de levage placé dans le socle pour porter une palette, dans lequel le cadre de levage est raccordé via un premier câble passant au-dessus d'une poulie à un contre-poids et via un second câble passant au-dessus d'une poulie à un moteur pour soulever le cadre de levage.

22. Installation de palettisation selon la revendication 21, **caractérisée en ce que** le cadre de levage comprend un moyen de support pour soutenir la palette.

23. Installation de palettisation selon la revendication 21 ou 22, **caractérisée en ce que** le cadre de levage comprend des moyens de serrage pour serrer fixement une palette sur les côtés.
